# FASCICULE DE BREVET EUROPEEN

(11) **EP 0 470 888 B1**
(45) Date de publication et mention de la délivrance du brevet: **11.01.1995**
(21) Numéro de dépôt: 91402116.7
(22) Date de dépôt: 29.07.1991
(51) Int. Cl.: B62D 1/19

(54) **Colonne de direction notamment de véhicule automobile**
Lenksäule insbesondere für ein Kraftfahrzeug
Steering column especially for a motor vehicle

(30) Priorité: 31.07.1990 FR 9009771
(43) Date de publication de la demande: 12.02.1992
(73) Titulaire: ECIA - EQUIPEMENTS ET COMPOSANTS POUR L'INDUSTRIE AUTOMOBILE, F-25400 Audincourt (FR)
(72) Inventeur: Hoblingre, André, F-25700 Valentigney (FR); Passebecq, Ghislain, F-25400 Waudincourt (FR)
(74) Mandataire: Habasque, Etienne Joel Jean-François

(56) Documents cités:
- EP-A- 0 167 925
- DE-A- 1 605 885
- DE-B- 1 780 061
- FR-A- 2 284 500
- GB-A- 2 113 629
- US-A- 3 757 601

## Description

La présente invention concerne une colonne de direction notamment de véhicule automobile.

On connait déjà dans l'état de la technique un certain nombre de colonnes de direction, notamment de véhicule automobile, qui comportent un axe de volant disposé dans un corps de colonne.

On connaît par exemple du document DE-B-1 780 061, une colonne de direction réglable en position dans laquelle l'axe de volant et le corps de colonne comportent chacun deux parties déplaçables à coulissement l'une par rapport à l'autre. Le corps est relié à un organe de montage déplaçable par rapport à une ferrure de support reliée à la carrosserie du véhicule, pour permettre le réglage de la position du volant et qui comporte des moyens de blocage en position de cet organe et donc du corps par rapport à la ferrure.

Cette structure permet d'obtenir un réglage angulaire et axial de la position du volant pour adapter celle-ci à la morphologie du conducteur.

Pour des raisons de sécurité, on a tendance à intégrer de plus en plus dans ces colonnes de direction, des moyens d'absorption d'énergie de choc.

Ces moyens sont adaptés pour réduire les blessures occasionnées lorsque par exemple le conducteur du véhicule frappe le volant de direction consécutivement à un choc.

C'est ainsi que les corps de colonne présentent dans certains cas une zone de déformation qui est constituée par exemple par une partie ondulée de ceux-ci ou une zone de cassure de section réduite, permettant aux corps soit de se déformer soit de casser au niveau de la zone, pour assurer l'amortissement des chocs sur la colonne.

En effet, ces zones de cassure ou de déformation permettent d'absorber l'énergie d'un choc à l'une ou l'autre des extrémités de cette colonne, pour apporter une meilleure sécurité au conducteur du véhicule en empéchant, dans un cas, la colonne de remonter dans l'habitacle du véhicule et dans un autre cas, au conducteur de frapper un corps complètement rigide.

Cependant, ces colonnes présentent un certain nombre d'inconvénients dans la mesure où la structure de ces corps est relativement complexe à réaliser, est d'un coût de réalisation élevé et présente un encombrement important.

Le but de l'invention est donc de résoudre ces problèmes en proposant une colonne de direction dont la structure soit simple, fiable, qui soit facile à réaliser et qui permette d'absorber l'énergie d'un choc à l'une ou l'autre de ses extrémités.

A cet effet, l'invention a pour objet une colonne de direction, notamment de véhicule automobile, du type comportant un axe de volant disposé dans un corps de colonne, comprenant chacun deux parties déplaçables à coulissement l'une dans l'autre, le corps de colonne étant relié à un organe de montage monté déplaçable dans une ferrure de support reliée à la carrosserie du véhicule, pour permettre le réglage de la position du volant et des moyens de blocage en position de cet organe et donc du corps par rapport à la ferrure, caractérisée en ce que l'organe de montage comporte des patins d'immobilisation par friction des deux parties de corps l'une par rapport à l'autre, s'étendant dans des évidements de la partie extérieure du corps et dont les extrémités sont en appui sur la partie intérieure de celui-ci, pour permettre, en cas de choc à l'une ou l'autre des extrémités de la colonne, la rétraction de celle-ci et une absorption d'énergie de choc.

Ces patins peuvent être prévus à l'extrémité de branches de l'organe de montage, sur lesquelles agissent les moyens de blocage du corps en position dans la ferrure.

L'invention sera mieux comprise à l'aide de la description qui va suivre, donnée uniquement à titre d'exemple et faite en se référant aux dessins annexés, sur lesquels :
- la Fig.1 représente une vue schématique en coupe d'une colonne de direction selon l'invention; et
- la Fig.2 représente une vue en coupe prise suivant la ligne 2-2 de cette Fig.1.

Ainsi qu'on peut le voir sur ces figures, la colonne de direction, notamment de véhicule, selon l'invention, et désignée par la référence générale 1 est du type comportant un axe de volant 2 disposé dans un corps de colonne 3.

Cet axe de volant comporte deux parties respectivement 4 et 5 déplaçables à coulissement l'une dans l'autre et dont les extrémités sont maintenues axialement en 6 et 7 à chaque extrémité du corps de colonne dans le mode de réalisation représenté. Ces extrémités de l'axe de volant peuvent être maintenues par exemple par des roulements à billes ou par des roulements à aiguilles pour permettre la rotation de l'axe dans le corps.

A l'une de ses extrémités, l'axe de volant 2 porte le volant, tandis que son autre extrémité est reliée au reste du mécanisme de direction du véhicule par tous moyens d'accouplement appropriés.

Le corps de colonne 3 comporte quant à lui des moyens de fixation 8 et 9, constitués par exemple par des pattes en saillie latérale, permettant de fixer ce corps de colonne sur le reste de la carrosserie du véhicule.

Selon l'invention, le corps 3 comporte deux parties respectivement 10 et 11, déplaçables à coulissement l'une dans l'autre et il est prévu des moyens 12 d'immobilisation par friction de ces deux parties l'une par rapport à l'autre.

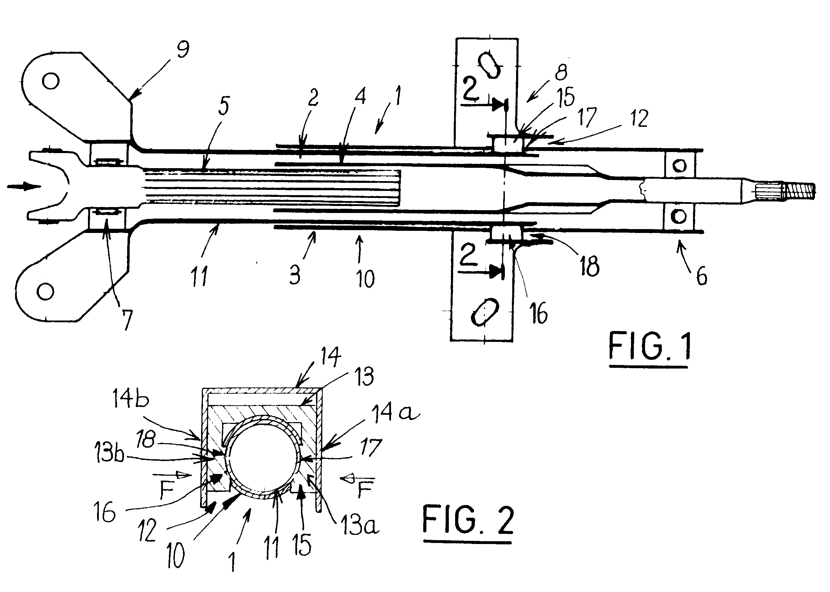

La colonne de direction peut par exemple se présenter sous la forme d'une colonne de direction réglable dans laquelle le corps 1 de colonne est relié à un organe de montage 13 ( Fig.2) monté déplaçable dans une ferrure de support 14, reliée à la carrosserie du véhicule, par l'intermédiaire par exemple des pattes de èfixation 8 pour permettre le réglage de la position du volant.

Bien entendu, des moyens de blocage en position de cet organe de montage et donc du corps par rapport à la ferrure, sont prévus. Ces moyens de blocage étant bien connus dans l'état de la technique, on ne les décrira pas plus en détail, mais on notera tout de même que ces moyens de blocage peuvent être constitués par des moyens de rapprochement suivant les flèches F de la Fig.2, des branches latérales 14a et 14b de la ferrure de support et donc de serrage de celles-ci sur des branches latérales 13a, 13b de l'organe de montage 13.

On notera également que des moyens tendant à écarter au moins l'une des branches latérales de la ferrure d'une branche correspondante de l'organe de montage, sont également connus pour bloquer en position l'organe de montage et donc le corps de colonne, dans la ferrure.

Les moyens d'immobilisation par friction des deux parties du corps l'une par rapport à l'autre, désignés par la référence générale 12 sur ces figures, et qui sont commandés par les moyens de blocage décrits précédemment, comprennent avantageusement des patins de friction 15 et 16 diamètralement opposés, s'étendant dans des évidements 17 et 18 respectivement de la partie extérieure du corps désignée par la référence 10 sur ces Figures et dont les extrémités sont en appui sur la partie intérieure 11 du corps.

Comme on peut le voir plus particulièrement sur la Fig. 2, ces patins 15 et 16 sont en fait prévus à l'extrémité des branches latérales 13a et 13b de l'organe de montage 13.

Ainsi, on conçoit que lorsque les moyens de blocage du corps de colonne dans la ferrure, par rapprochement des branches latérales 14a et 14b de celle-ci, sont déplacés vers leur position de blocage, ces branches latérales 14a et 14b ont tendance à se rapprocher et à venir se plaquer contre les surfaces correspondantes des branches latérales 13a et 13b de l'organe de montage 13.

Ceci amène les patins de friction 15 et 16 à s'engager dans les évidements 17 et 18 de la partie extérieure 10 du corps de colonne et les extrémités de ces patins viennent en appui contre la partie intérieure 11 de ce corps.

Ceci permet d'immobiliser ces deux parties de corps l'une par rapport à l'autre.

On notera que le degré d'immobilisation est proportionnel à la force de serrage des moyens de blocage et à l'ajustement des patins dans les évidements 17 et 18 de la partie extérieure du corps.

Dans le cas où des moyens tendant à écarter les branches latérales respectivement de la ferrure et de l'organe de montage sont utilisés, les branches latérales de l'organe de montage 13 sont également rapprochées du corps de colonne, de sorte que les patins prévus à l'extrémité de ces branches, s'engagent également dans les évidements de la partie extérieure du corps et les extrémités de ceux-ci viennent en appui contre la partie intérieure de celui-ci, pour immobiliser ces deux parties.

En cas de choc à l'une ou l'autre des extrémités de cet ensemble, la force exercée sur l'une ou l'autre des parties du corps pour faire coulisser ces parties l'une dans l'autre, devient supérieure à la force d'immobilisation des deux parties l'une par rapport à l'autre, engendrée par le serrage, de sorte que les deux parties du corps peuvent se déplacer l'une dans l'autre pour permettre la rétraction de celui-ci et l'absorption de l'énergie de choc par exemple par rapprochement des moyens de fixation 8 et 9..

Ceci permet d'améliorer la sécurité à bord des véhicules en empêchant dans un cas cette colonne de remonter dans l'habitacle du véhicule et dans un autre cas, le conducteur du véhicule de frapper un corps complètement rigide.

Bien entendu, la force d'immobilisation des deux parties du corps l'une par rapport à l'autre, est fonction de la force de serrage des moyens de blocage du corps en position dans la ferrure, de sorte que cette force d'immobilisation peut être réglée à une valeur déterminée.

Enfin, d'autres modes de réalisation des moyens d'immobilisation peuvent être prévus en fonction de la structure des moyens de blocage, ceux-ci pouvant être constitués par exemple par un tirant s'étendant entre les branches de la ferrure et à l'une des extrémités duquel est prévu un système à vis-écrou ou encore un système à genouillère.

## Revendications

1. Colonne de direction, notamment de véhicule automobile, du type comportant un axe de volant (2) disposé dans un corps de colonne (3), comprenant chacun deux parties (4,5,10,11) déplaçables à coulissement l'une dans l'autre, le corps de colonne (3) étant relié à un organe de montage (13) monté déplaçable dans une ferrure de support (14) reliée à la carrosserie du véhicule, pour permettre le réglage de la position du volant et des moyens de blocage en position de cet organe (13) et donc du corps par rapport à la ferrure (14), caractérisée en ce que l'organe de montage (13) comporte des patins (15,16) d'immobilisation par friction des deux parties de corps l'une par rapport à l'autre, s'étendant dans des évidements (17,18) de la partie extérieure (10) du corps et dont les extrémités sont en appui sur la partie intérieure (11) de celui-ci, pour permettre, en cas de choc à l'une ou l'autre des extrémités de la colonne, la rétraction de celle-ci et une absorption d'énergie de choc.

2. Colonne selon la revendication 1, caractérisée en ce que lesdits patins (15,16) sont prévus à l'extrémité de branches (13a,13b) de l'organe de montage (13), sur lesquelles agissent les moyens de blocage en position dans la ferrure.

3. Colonne selon la revendication 2, caractérisée en ce que la ferrure (14) comporte deux branches latérales (14a,14b) de part et d'autre des branches (13a,13b) de l'organe de montage (13) et en ce que les moyens de blocage comprennent des moyens de rapprochement de ces branches et donc de serrage de celles-ci sur les branches (13a, 13b) de l'organe de montage (13) pour plaquer l'extrémité des patins (15,16) contre la partie intérieure (11) du corps.

4. Colonne selon la revendication 2, caractérisée en ce que la ferrure (14) comporte deux branches latérales (14a,14b) de part et d'autre des branches (13a,13b) de l'organe de montage (13) et en ce que les moyens de blocage comprennent des moyens tendant à écarter au moins l'une des branches de l'organe de montage (13), de la branche correspondante de la ferrure (14) pour bloquer ces branches les unes par rapport à l'autre et plaquer les extrémités des patins (15,16) contre la partie intérieure (11) du corps.

5. Colonne selon l'une quelconque des revendications précédentes, caractérisée en ce que les moyens de friction (12) comportent deux patins (15,16) diamétralement opposés.

## Claims

1. Steering column, in particular for a motor vehicle, of the type comprising a steering-wheel shaft (2) arranged in a column body (3), each comprising two parts (4,5,10,11) which can be moved by sliding in one another, the column body (3) being connected to a mounting member (13) mounted movably in a support fitting (14) connected to the bodywork of the vehicle in order to allow adjustment of the position of the steering wheel, and means for positional blocking of this member (13) and therefore of the body with respect to the fitting (14); characterized in that the mounting member (13) comprises contact blocks (15,16) for frictional immobilization of the two body parts with respect to one another, extending in recesses (17,18) of the outer part (10) of the body and whose ends bear on the inner part (11) thereof in order to allow, in the event of impact at one or other of the ends of the column, this column to be retracted and impact energy to be absorbed.

2. Device according to Claim 1, characterized in that the said contact blocks (15,16) are provided at the end of branches (13a,13b) of the mounting member (13) on which branches the means for positional blocking in the fitting act.

3. Column according to Claim 2, characterized in that the fitting (14) comprises two side branches (14a,14b) upon either side of the branches (13a,13b) of the mounting member (13); and in that the blocking means comprise means for moving these branches together and therefore clamping them on the branches (13a,13b) of the mounting member (13) in order to press the end of the contact blocks (15,16) against the inner part (11) of the body.

4. Column according to Claim 2, characterized in that the fitting (14) comprises two side branches (14a,14b) on either side of the branches (13a,13b) of the mounting member (13); and in that the blocking means comprise means tending to separate at least one of the branches of the mounting member (13) from the corresponding branch of the fitting (14) in order to block these branches with respect to one another and press the ends of the contact blocks (15,16) against the inner part (11) of the body.

5. Column according to any one of the preceding claims, characterized in that the friction means (12) comprise two diametrically opposite contact blocks (15,16).

## Patentansprüche

1. Lenksäule insbesondere für ein Kraftfahrzeug, von der Art, welche eine Lenkwelle (2) enthält, welche in einem Säulenkörper (3) angeordnet ist, die jeweils zwei ineinander verschiebbare Teile (4, 5, 10, 11) enthalten, wobei der Säulenkörper (3) mit einem Montageelement (13) verbunden ist, welches verschiebbar in einem mit der Fahrzeugkarrosserie verbundenen Haltebeschlag (14) montiert ist, um eine Regulierung der Stellung des Lenkrades und der Blockiermittel (13) dieses Elementes und damit des Körpers gegenüber dem Beschlag (14) zu ermöglichen,
**dadurch gekennzeichnet**, **daß**
das Montageelement (13) Gleitkufen (15, 16) für die Festlegung durch Reibung der beiden Teile des Körpers untereinander aufweist, welche sich in Aussparungen (17, 18) des äußeren Teils (10) des Körpers erstrecken und deren Enden sich an dem Innenteil (11) des Körpers abstützen, um im Falle einer Stoßbelastung an dem einen oder anderen Ende der Lenksäule den Einzug derselben und eine Absorption der Stoßenergie zu ermöglichen.

2. Lenksäule nach Anspruch 1,
**dadurch gekennzeichnet**, **daß**
die Gleitkufen (15, 16) am äußeren Ende von Schenkeln (13a, 13b) des Montageelementes (13) vorgesehen sind, auf die die Blockiermittel für die Positionierung in dem Beschlag einwirken.

3. Lenksäule nach Anspruch 2,
**dadurch gekennzeichnet**, **daß**
der Beschlag (14) zwei Seitenschenkel (14a, 14b) an den jeweiligen Seiten der Schenkel (13a, 13b) des Montageelementes (13) aufweist, und dadurch, daß die Blockiermittel Mittel für die Annäherung dieser Schenkel und damit für deren Verklemmung an den Schenkeln (13a, 13b) des Montageelementes (13) aufweisen, um das äußere Ende der Gleitkufen (15, 16) an dem Innenteil (11) des Körpers festzulegen.

4. Lenksäule nach Anspruch 2,
**dadurch gekennzeichnet**, **daß**
der Beschlag (14) zwei Seitenschenkel (14a, 14b) aufweist, die an beiden Seiten der Schenkel (13a, 13b) des Montageelementes (13) angeordnet sind, und dadurch, daß die Blockiermittel Mittel aufweisen, welche mindestens einen der Schenkel des Montageelementes (13) von dem entsprechenden Schenkel des Beschlages (14) abspreizen, um diese Schenkel untereinander zu blockieren und die äußeren Enden der Gleitkufen (15, 16) an dem Innenteil (11) des Körpers festzulegen.

5. Lenksäule nach einem er vorausgegangenen Ansprüche,
**dadurch gekennzeichnet**, **daß**
die Reibmittel (12) zwei diametral gegenüberliegende Gleitklufen (15, 16) enthalten.
